# EUROPÄISCHE PATENTSCHRIFT

(11) **EP 0 812 759 B1**
(45) Veröffentlichungstag und Bekanntmachung des Hinweises auf die Patenterteilung: **11.10.2000**
(21) Anmeldenummer: 97105344.2
(22) Anmeldetag: 29.03.1997
(51) Int. Cl.: B62J 6/00

(54) **Fahrtrichtungsanzeiger, insbesondere für motorisierte Zweiräder**
Direction indicators for motorcycles
Indicateur de direction pour vélomoteurs

(30) Priorität: 10.06.1996 DE 19623068
(43) Veröffentlichungstag der Anmeldung: 17.12.1997
(73) Patentinhaber: Kellerman, Guido, 48167 Münster (DE)
(72) Erfinder: Kellerman, Guido, 48167 Münster (DE)
(74) Vertreter: Castell, Klaus, Dr.-Ing.

(56) Entgegenhaltungen:
- DE-A- 3 221 285
- DE-U- 29 604 320
- FR-A- 1 450 781
- GB-A- 834 060
- US-A- 4 875 142
- US-A- 5 247 431

## Beschreibung

Die Erfindung betrifft einen Fahrtrichtungsanzeiger, insbesondere für motorisierte Zweiräder. Hierzu zählen Mofa, Moped, Kleinkraftrad, Leichtkraftrad, Kraftrad usw.

Üblicherweise verfügen Motorräder heute über eine elektrische Anlage zur Anzeige der Fahrtrichtungsänderung, die im wesentlichen aus Blinkrelais, Betätigungsschalter und vier Blinkleuchten, die paarweise angeordnet sind, besteht. Ein Paar der Blinker befindet sich im Bereich des Rücklichtes und strahlt nach hinten ab, ein weiteres ist üblicherweise an der Vorderradgabel montiert und strahlt nach vorne ab.

Wegen der besseren Sichtbarkeit wäre jedoch die Montage der vorderen Blinker an den Enden der Lenkstange sinnvoll. Dort sind sie auch von der Seite (z. B. für den Fahrer eines neben dem Motorrad stehenden Pkws) gut sichtbar.

In der Tat gibt es auch solche Blinker zur Montage an den Lenkerenden. In der Praxis hat sich aber gezeigt, daß es aufgrund der Vibrationen der Lenkerenden häufig zu Störungen (Kontaktprobleme, Abreißen der Glühwendel) kommt. Zudem ist die nachträgliche Montage der auf dem Markt befindlichen Blinker für Lenkerenden relativ aufwendig und nur von Motorradfahrern mit einigem handwerklichen Geschick zu bewältigen. Die Vibrationen der Lenkerenden eines Zweirades wirken sich darüber hinaus nicht nur auf die Lebensdauer von eventuell montierten Blinkern negativ aus, sondern beeinträchtigen auch den Komfort und damit die Konzentrationsfähigkeit und Sicherheit des Fahrers in erheblichem Maße.

Bei vielen, auch modernen Motorrädern ergeben sich im Fahrbetrieb so heftige Vibrationen an den Lenkerenden und damit an den Griffen und Bedienelementen (Handgriff für Vorderradbremse, Gasgriff, Kupplungsbestätigung, Horn, Licht, Blinkschalter), daß der Fahrer trotz weicher Gummigriffe und Handschuhen schon nach kurzer Zeit nur noch ein taubes Gefühl in den Händen verspürt.

Die GB-A-834,060 beschreibt einen Fahrtrichtungsanzeiger, bei dem ein rotationssymetrisches, einen zylinderförmigen Mittelkörper, welcher durch eine Halbkugelschale an einer Seite verschlossen ist, aufweisendes Blinkerglas durch einen Käfig geschützt ist, der dieses Glas von außen umgibt und einen zentralen Durchbruch aufweist, von denen in der Montageposition eine Öffnung nach vorne und eine nach hinten weist.

Desweiteren ist aus der DE-U1-18 40 287 ein Fahrtrichtungsanzeiger bekannt, der ebenso an einem Lenkerende angebracht werden kann und ein im Wesentlichen kreisförmiges Gehäuse aufweist, an dessen einer Seite eine Haltevorrichtung vorgesehen ist. Das Gehäuse umfaßt einen zentralen Durchbruch, der durch zwei halbschalenförmige Fenster abgeschlossen wird. Die Haltevorrichtung umfaßt eine bündig in ein Lenkerende einschiebbare Hülse, die in einen Gewindebolzen ausläuft, dessen Schaft zwischen einer unverdrehbar aufgesetzten Gegenmutter und dem Bolzenkopf von einem Gummiring umschlossen wird, der derart bemessen ist, daß sie sich beim Verdrehen des Gewindebolzen gegenüber der unverdrehbar angeordneten Mutter gegen eine Innenwand des Lenkerrohres preßt und so die Fassung in ihrer Lage hält.

Es ist Aufgabe der Erfindung, einen Fahrtrichtungsanzeiger zur Montage am Lenkerende eines Motorrades dahingehend weiter zu entwickeln, daß störende Vibrationen der Lenkerenden weitesgehend unterbunden werden.

Diese Aufgabe wird gelöst mit Fahrtrichtungsanzeigern mit den Merkmalen der Patentansprüche 1, 7, 10 und 12.

Gegenstand der Erfindung ist also ein Blinker, der so gestaltet ist, daß durch seine Montage die Schwingung des Lenkerendes in Amplitude und Frequenz deutlich verringert wird.

Gemäß der voliegenden Erfindung wird dies dadurch erreicht, daß der Blinkerkörper als Tilgermasse ausgelegt wird. Die Auswahl der geeigneten Tilgermasse hängt dabei von einer Vielzahl von Parametern ab. Die wichtigsten sind Material, Wandstärke, Durchmesser und Länge der Lenkstange, bevorzugter Drehzahlbereich des Motors, Gestaltung der Motoraufhängung und des Fahrwerks. Allgemein läßt sich sagen, daß die Frequenz der Schwingung mit Erhöhung der Masse am Lenkerende abnimmt. Gute Ergebnisse lassen sich bei den heute üblichen Motorradkonstruktionen mit einer Masse des Fahrtrichtungsanzeigers von mindestens 200 Gramm erzielen. Der praktische Einsatzbereich liegt vor allem bei 200 bis 400 Gramm.

Ein weiterer wichtiger Punkt für die Wirksamkeit der Erfindung ist die Gestaltung der Verbindung zwischen Lenkerende und Blinker (= Tilgermasse).

Zweckmäßig ist die Erfindung so zu gestalten, daß sie mit einem Ende eines Zweiradlenkers lösbar verbindbar ist. Dies führt dazu, daß sie nachträglich an der Lenkstange montierbar ist. Hierdurch ist es möglich, bereits im Verkehr befindliche Zweiräder mit einem Blinker gemäß der Erfindung nachzurüsten.

Eine bevorzugte Ausführungsform der Erfindung sieht vor, daß die Verbindung nicht starr, sondern schwingungsmechanisch gelenkig, z. B. durch ein Gummielement, ausgeführt ist.

Eine optisch und technisch günstige Variante ist so gestaltet, daß die schwingungsmechanisch gelenkige Verbindung in einem offenen Ende eines Zweiradlenkers angeordnet ist.

Eine besonders bevorzugte Version der Erfindung sieht vor, daß als Leuchtkörper eine Halogenlampe zum Einsatz kommt. Durch die höhere Lichtausbeute im Vergleich zu einer entsprechenden Glühbirne ist die Absicht der Richtungsänderung des Zweiradfahrers für die übrigen Verkehrsteilnehmer besonders gut sichtbar. Außerdem erlaubt der Einsatz einer Halogenlampe eine kompaktere Bauweise, was bei gleichem Volumen die Unterbringung einer größeren Masse im Blinkergehäuse ermöglicht.

Im folgenden werden zwei Ausführungsbeispiele der Erfindung anhand der Zeichnung näher erläutert. Es zeigen,
- Figur 1: eine Seitenansicht des Blinkers, am Lenkerende montiert,
- Figur 2: eine Draufsicht des Blinkers in geschnittener Darstellung,
- Figur 3: einen Längsschnitt durch eine weitere Ausführungsform der schwingungsmechanisch gelenkigen Verbindung und
- Figur 4: einen Querschnitt durch den Verbindungsmechanismus gemäß Figur 3.

Das Gehäuse 1 des Blinkers 13 stellt die eigentliche Tilgermasse dar. Es soll daher möglichst massiv und aus einem entsprechend schweren Werkstoff (z. B. Edelstahl) gefertigt sein. In einem zentralen Durchbruch, der durch zwei orangefarbene Kunststoffgläser 5 abgeschlossen wird, befindet sich die Leuchteinheit 2, 3, 4 des Blinkers. Das Halteblech 3 dient zur Fixierung der Lampenfassung 4, die zur Aufnahme einer handelsüblichen Halogenlampe 2 geeignet ist. Die Zuleitungskabel 6 (geschaltetes Plus vom Blinkrelais, Masse) werden durch das Gewinderohr 7 aus dem Gehäuse 1 nach außen geführt. Das Gehäuse 1 mit Einbauten 2, 3, 4 Kunststoffgläsern 5 und Gewinderohr 7 hat eine Masse von 250 Gramm.

Auf diesem Gewinderohr 7 befindet sich die Haltevorrichtung 8, 9, 10, mit der der Blinker am Lenkerende 12 des Zweirades montiert werden kann. Sie besteht aus dem Distanzstück 8 und dem Gummielement 9, die durch die Mutter 10 fixiert werden. Das Gummielement entspricht in der Form einem Hohlzylinder. Es hat die Aufgabe, für eine reibkraftschlüssige Verbindung des Blinkers mit der Innenseite des Lenkerrohres 11 zu sorgen. Wenn der Abstand zwischen Gehäuse 1 und Mutter 10 durch Anziehen der Mutter 10 oder Drehen des Gehäuses 1 auf dem Gewinderohr 7 verringert wird, so wird das Gummielement 9 infolge der auftretenden Druckkraft gestaucht. Diese Stauchung des Gummielementes 9 geht einher mit einer Ausdehnung in radialer Richtung und führt im Inneren des Lenkerrohres 11 zu der gewünschten kraftschlüssigen Verbindung.

Die Montage selbst vollzieht sich in zwei Schritten. Zunächst wird die Mutter 10 soweit angezogen, daß der Außendurchmesser des Gummielementes 9 ungefähr dem Innendurchmesser des Lenkerrohres 11 entspricht. Bei entsprechender Dimensionierung lassen sich so alle gängigen Lenkerrohrinnendurchmesser von d = 16,5 mm bis d = 25 mm realisieren. Dann wird die Haltevorrichtung (8, 9, 10) des Blinkers bis zum Anschlag des Gehäuses 1 in das Lenkerrohr 11 eingeführt. Nun reichen ein bis zwei Drehungen des Gehäuseskörpers 1 aus, um einen sicheren Sitz des Blinkers 13 am Lenkerende 21 des Zweirades zu gewährleisten. Dabei ist bemerkenswert, daß auf diese Weise die Verbindung zwischen Blinker 13 und Lenkerrohr 11 ausschließlich über das Gummielement 3 erfolgt, so daß keine starre, sondern eine elastische Klemmverbindung vorliegt. Diese elastische Aufhängung führt zusammen mit der hohen Gehäusemasse zu der sehr guten schwingungsdämpfenden Wirkung der vorliegenden Erfindung.

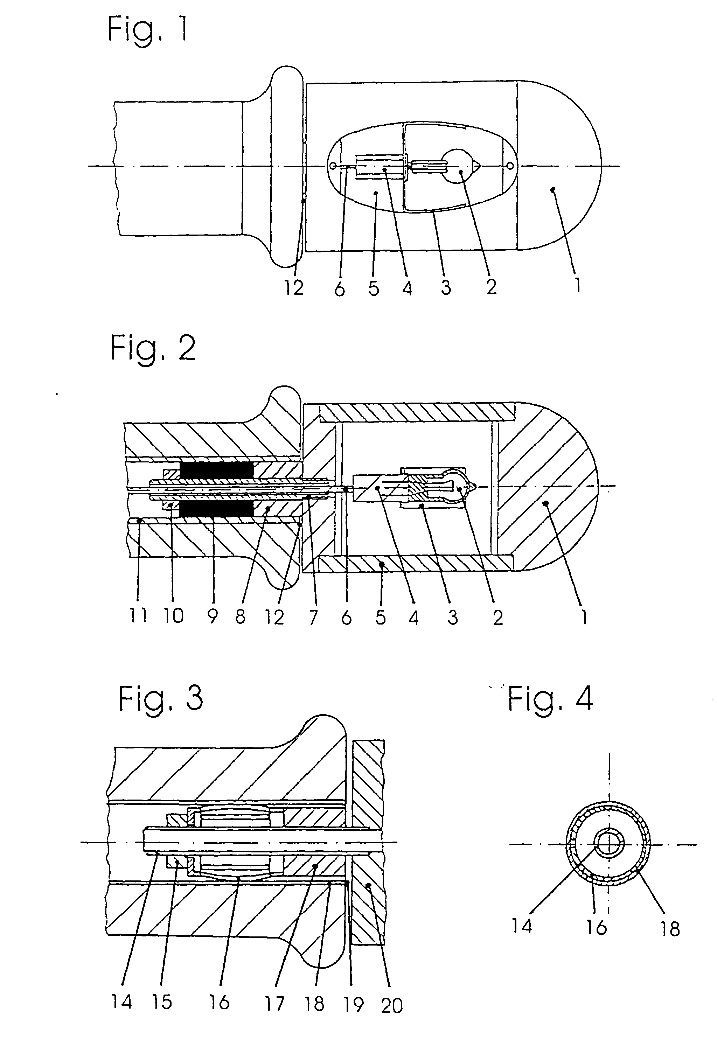

In den Figuren 3 und 4 ist eine weitere konstruktive Ausführung der Haltevorrichtung 15, 16, 17 dargestellt. Bei dieser Ausführung wird die elastische Verbindung zwischen Lenkerrohr 18 und Blinker 13 durch einen Spreizkörper 16 erreicht. Dieser Spreizkörper 16 ist ein tonnenförmiger, dünnwandiger Hohlkörper, dessen Mantelfläche mehrfach geschlitzt ist. Als Material für dieses Bauteil ist neben Stahlblech auch Teflon, Silicon oder ein anderer Kunststoff denkbar. Die Montage eines mit der hier erläuterten Haltevorrichtung 15, 16, 17 ausgestatteten Blinkers 22 erfolgt ähnlich der bereits beschriebenen Weise. Zunächst wird die Mutter 15 auf dem Gewinderohr 14 soweit angezogen, daß der Spreizkörper 16 mit einem Ende an der Mutter 15 und mit dem anderen Ende an dem Distanzstück 17 anliegt. Wird die Mutter 15 nun weiter angezogen, so wird der Spreizkörper 16 in achsialer Richtung gestaucht, was zu einem Aufbiegen der einzelnen Stege und somit zu einer Spreizung des Bauteils in radialer Richtung führt. Die Mutter 15 wird soweit angezogen, bis der Außendurchmesser des Spreizkörpers 16 ungefähr dein Innendurchmesser des Lenkerrohres 18 entspricht. Dann wird die Haltevorrichtung, bestehend aus Mutter 15, Spreizkörper 16 und Distanzstück 17, in das Lenkerrohr 18 eingeschoben. Durch wenige Drehungen des Gehäusekörpers 20 kann nun eine sichere Verbindung zwischen Blinker 22 und Lenkerende 19 hergestellt werden.

Auch diese Konstruktion gewährleistet die gewünschte elastische Verbindung zwischen Lenkerrohr 19 und Blinker 22.

## Patentansprüche

1. Fahrtrichtungsanzeiger (13, 22), insbesondere für motorisierte Zweiräder, **dadurch gekennzeichnet, daß** er an einem Ende eines Zweiradlenkers (19, 21) angeordnet ist und eine Masse von mindestens 150 Gramm besitzt.

2. Fahrtrichtungsanzeiger nach Anspruch 1, **dadurch gekennzeichnet, daß** die Masse 200 - 400 Gramm beträgt.

3. Fahrtrichtungsanzeiger nach Anspruch 1 oder 2, **dadurch gekennzeichnet, daß** er mit einem Ende eines Zweiradlenkers (19, 21) lösbar verbindbar ist.

4. Fahrtrichtungsanzeiger nach einem der vorhergehenden Ansprüche, **dadurch gekennzeichnet, daß** der Fahrtrichtungsanzeiger (13, 22) mit dem Lenkerende (19, 21) schwingungsmechanisch gelenkig verbunden ist.

5. Fahrtrichtungsanzeiger nach Anspruch 4, **dadurch gekennzeichnet, daß** die schwingungsmechanisch gelenkige Verbindung in einem offenen Ende eines Zweiradlenkers angeordnet ist.

6. Fahrtrichtungsanzeiger nach einem der vorhergehenden Ansprüch, **dadurch gekennzeichnet, daß** er eine Halogenlampe (2) aufweist.

7. Fahrtrichtungsanzeiger, insbesondere für motorisierte Zweiräder, mit einem Gehäuse, welches sich in zumindest eine Längserstreckungsrichtung erstreckt, und einer Haltevorrichtung, die an dem Gehäuse im Wesentlichen parallel zur Längserstreckungsrichtung angeordnet ist, ***dadurch gekennzeichnet, daß*** das Gehäuse (1) einen zentralen Durchbruch aufweist, der durch zwei Fenster (5) abgeschlossen wird.

8. Fahrtrichtungsanzeiger nach Anspruch 7, ***dadurch gekennzeichnet, daß*** das Gehäuse (1) rotationssymmetrisch ausgebildet ist.

9. Fahrtrichtungsanzeiger nach Anspruch 7 oder 8, ***dadurch gekennzeichnet, daß*** die Fenster (5) das Gehäuse (1) bündig verschließen.

10. Fahrtrichtungsanzeiger, insbesondere für motorisierte Zweiräder, ***dadurch gekennzeichnet, daß*** der Fahrtrichungsanzeiger (13, 22) mit dem Lenkerende (19, 21) schwingungsmechanisch gelenkig verbunden ist.

11. Fahrtrichtungsanzeiger nach Anspruch 10, ***dadurch gekennzeichnet, daß*** er eine Haltevorrichtung (8, 9, 10) aufweist, die ein stauchbares Gummielement (9) umfasst.

12. Fahrtrichtungsanzeiger, insbesondere für motorisierte Zweiräder, ***dadurch gekennzeichnet, daß*** er eine Halogenlampe (2) aufweist.

## Claims

1. Traveling direction indicator (13, 22), in particular for motorized two-wheelers, characterized by the fact that it is situated at one end of the two-wheel handlebar (19, 21), and exhibits a mass of at least 150 grams.

2. Traveling direction indicator according to claim 1, characterized by the fact that the mass measures 200-400 grams.

3. Traveling direction indicator according to claim 1 or 2, characterized by the fact that it can be detachably connected with one end of the two-wheel handlebar (19, 21).

4. Traveling direction indicator according to one of the preceding claims, characterized by the fact that the traveling direction indicator (13, 22) is vibration pivoted in a to the handlebar end (19, 21).

5. Traveling direction indicator according to claim 4, characterized by the fact that the vibration pivoted joint is arranged in an open end of a two-wheel handlebar.

6. Traveling direction indicator according to one of the preceding claims, characterized by the fact that it has a halogen lamp (2).

7. Traveling direction indicator, in particular for motorized two-wheelers, with a casing that extends in at least one longitudinal direction, and a mounting device situated essentially parallel to the longitudinal extension direction on the casing, characterized by the fact that the casing (1) exhibits a central hole that is sealed by two windows (5).

8. Traveling direction indicator according to claim 7, characterized by the fact that the casing (1) is rotationally symmetric.

9. Traveling direction indicator according to claim 7 or 8, characterized by the fact that the windows (5) form a flush seal with the casing (1).

10. Traveling direction indicator, in particular for motorized two-wheelers, characterized by the fact that the traveling direction indicator (13, 22) is vibration pivoted to the handlebar end (19, 21).

11. Traveling direction indicator according to claim 10, characterized by the fact that it exhibits a mounting device (8, 9, 10) that encompasses a compressible rubber element (9).

12. Traveling direction indicator, in particular for motorized two-wheelers, characterized by the fact that it exhibits a halogen lamp (2).

## Revendications

1. Clignoteur (13, 22), en particulier pour deux roues motorisés, caractérisé en ce qu'il est placé à une extrémité d'un guidon (19, 21) de deux roues et possède une masse de 150 grammes.

2. Clignoteur selon la revendication 1, caractérisé en ce que la masse est de 200 - 400 grammes.

3. Clignoteur selon la revendication 1 ou 2, caractérisé en ce qu'il peut être raccordé de manière amovible à une extrémité d'un guidon (19, 21) de deux roues.

4. Clignoteur selon l'une des revendications qui précèdent, caractérisé en ce que le clignoteur (13, 22) est raccordé à l'extrémité du guidon (19, 21) par une articulation de mécanique vibratoire.

5. Clignoteur selon la revendication 4, caractérisé en ce que le raccordement par articulation de mécanique vibratoire est placée dans une extrémité ouverte d'un guidon de deux roues.

6. Clignoteur selon l'une des revendications qui précèdent, caractérisé en ce qu'il présente une lampe halogène (2).

7. Clignoteur, en particulier pour deux roues motorisés, comprenant un boîtier qui s'étend au moins dans le sens longitudinal, et un dispositif de maintien placé sur le boîtier, sensiblement en parallèle avec la direction longitudinale, caractérisé en ce que le boîtier (1) présente un percement central fermé par deux hublots

8. Clignoteur selon la revendication 7, caractérisé en ce que le boîtier (1) a une symétrie de révolution.

9. Clignoteur selon la revendication 7 ou 8, caractérisé en ce que les hublots (5) obturent le boîtier (1) à niveau.

10. Clignoteur, en particulier pour deux roues motorisés, caractérisé en ce que le clignoteur (13, 22) est raccordé à l'extrémité du guidon (19, 21) par une articulation de mécanique vibratoire.

11. Clignoteur selon la revendication 10, caractérisé en ce qu'il présente un dispositif de maintien (8, 9, 10) qui comprend un élément de caoutchouc compressible (9).

12. Clignoteur, en particulier pour deux roues motorisés, caractérisé en ce qu'il présente une lampe halogène (2).
